(19) Europäisches Patentamt
European Patent Office
Office européen des brevets

(11) Veröffentlichungsnummer: **0 248 183**
**A1**

# (12) EUROPÄISCHE PATENTANMELDUNG

(21) Anmeldenummer: **87105757.6**

(22) Anmeldetag: **18.04.87**

(51) Int. Cl.4: **C08G 18/42** , C08G 63/16

(30) Priorität: **25.04.86 DE 3614038**

(43) Veröffentlichungstag der Anmeldung:
**09.12.87 Patentblatt 87/50**

(84) Benannte Vertragsstaaten:
**AT BE CH DE ES FR GB IT LI NL SE**

(71) Anmelder: **BASF Aktiengesellschaft**
**Carl-Bosch-Strasse 38**
**D-6700 Ludwigshafen(DE)**

(72) Erfinder: **Steu, Joachim, Dr.**
**Am Huettenwingert 32**
**D-6706 Wachenheim(DE)**
Erfinder: **Straehle, Wolfgang, Dr.**
**Hampenweg 9**
**D-6900 Heidelberg(DE)**

(54) **Bei Raumtemperatur flüssige Polyester-polyole auf Basis von 2-Methylbutandiol-1,4, Verfahren zu deren Herstellung und deren Verwendung zur Herstellung von Kunststoffen nach dem Polyisocyanat-polyadditionsverfahren.**

(57) Die Erfindung beschreibt bei 25°C flüssige, Einheiten mit der Struktur $-OCH_2-CH(CH_3)-CH_2-CH_2O-$gebunden enthaltende Polyester-polyole mit einer durchschnittlichen Funktionalität von 2 bis 3, einer Hydroxylzahl von 25 bis 300, einer Säurezahl von kleiner als 2 und einer Viskosität von 200 bis $10^5$ m.Pa.s bei 25°C, die hergestellt werden durch Polykondensation in der Schmelze in Gegenwart oder Abwesenheit von Veresterungskatalysatoren von aliphatischen Polycarbonsäuren und/oder Polycarbonsäurederivaten und 2-Methyl-butandiol-1,4 oder Mischungen aus 2-Methyl-butandiol-1,4 und mindestens einem linearen oder verzweigten, gegebenenfalls Etherbrücken enthaltenden aliphatischen 2-bis 4-wertigen Alkohol mit einem 2-Methyl-butandiol-1,4-gehalt von mindestens 20 Gew.-%, bezogen auf das Gewicht der Alkoholmischung.

Die erfindungsgemäßen Polyester-polyole eignen sich zur Herstellung von kompakten oder zelligen Polyurethan-oder Polyurethan-Polyharnstoff-Kunststoffen, vorzugsweise Polyurethan-Elastomeren, nach dem Polyisocyanat-polyadditionsverfahren.

EP 0 248 183 A1

Xerox Copy Centre

## Bei Raumtemperatur flüssige Polyester-polyole auf Basis von 2-Methyl-butandiol-1,4, Verfahren zu deren Herstellung und deren Verwendung zur Herstellung von Kunststoffen nach dem Polyisocyanat-polyadditionsverfahren

Die Herstellung von Polyester-polyolen und deren Verwendung zur Herstellung von Polyurethankunststoffen nach dem Polyisocyanat-polyadditionsverfahren ist bekannt und wird in zahlreichen Literatur-und Patentpublikationen beschrieben. Verweisen möchten wir beispielsweise auf das Kunststoff-Handbuch, Band 7, Polyurethane, 1. Auflage, 1966, herausgegeben von A. Höchtlen und R. Vieweg, und 2. Auflage, 1983, herausgegeben von G. Oertel, Carl Hanser Verlag, München, Wien.

Die Polyester-polyole werden üblicherweise aus Polycarbonsäuren und mehrwertigen Alkoholen durch Schmelzkondensation in Gegenwart von Säuren oder Metallsalzen als Katalysator hergestellt. Zweckmäßigerweise wird die Polykondensation unter vermindertem Druck durchgeführt, um das bei der Kondensation entstehende Wasser aus der Reaktionsmischung abzudestillieren und die Gleichgewichtsreaktion hierbei in Richtung der Polyesterbildung zu verschieben. Auf diese Weise können beispielsweise Polyester-polyole mit Säurezahlen größer als 5 in relativ kurzen Reaktionszeiten hergestellt werden.

Obgleich Polyester-polyole, insbesondere solche auf der Grundlage von Adipinsäure und Alkandiolen, Alkandiolgemischen oder Mischungen aus Alkandiolen und höherwertigen Alkoholen, in großen Mengen zur Herstellung von Polyurethan-Kunststoffen für eine Vielzahl von Anwendungsbereichen eingesetzt werden, besitzen die Produkte auch Nachteile. Nachteilig ist insbesondere, daß die Polyester-polyole unter üblichen Lagerbedingungen vollständig oder teilweise auskristallisieren oder eine derartig hohe Viskosität aufweisen, daß sie nicht direkt bei Raumtemperatur nach dem Polyisocyanat-polyadditionsverfahren auf herkömmlichen Vorrichtungen verarbeitet werden können. Die Polyester-polyole müssen üblicherweise in ex-geschützten Apparaten aufgeschmolzen und homogenisiert werden und können nur bei erhöhten Temperaturen in kostspieligen temperierbaren Vorrichtungen zur Reaktion gebracht werden. Die Herstellung von Polyurethan-Fertigteilen wird dadurch verteuert.

Zur Vermeidung dieses Nachteils werden nach Angaben der EP-PS 017 060 zur Herstellung von Polyurethan-Elastomeren und nach Angaben der EP-PS 056 122 (US 4 362 825) zur Herstellung von flexiblen Polyurethan-Weichschaumstoffen flüssige Polyester-polyole mit Hydroxylzahlen von 40 bis 80 verwendet, die erhalten werden durch Polykondensation von organi schen Dicarbonsäuren mit Polyolmischungen aus mindestens vier 2-und 3-wertigen Alkoholen auf der Grundlage von 1,4-Butandiol, 1,6-Hexandiol, 1,5-Pentandiol und/oder Diethylenglykol und einem Alkantriol, wie z.B. Glycerin und/oder Trimethylolpropan, in bestimmten definierten Mengenverhältnissen. Die auf diese Weise erhaltenen Polyurethan-Elastomeren besitzen ein außerordentlich günstiges Kälteverhalten und ausgezeichnete Hydrolysebeständigkeit bei hoher mechanischer Festigkeit sowie einen sehr guten Druckverformungsrest und die Polyurethan-Weichschaumstoffe weisen neben einer verbesserten Hydrolysebeständigkeit eine sehr gute Stanzbarkeit auf. Polyolmischungen der genannten Art sind jedoch relativ teuer, da die Aufbaukomponenten teilweise durch Reduktion der entsprechenden Dicarbonsäuregemische erhalten werden und stehen nur in begrenzten Mengen für die Herstellung von Polyester-polyolen zur Verfügung. Ferner bedarf die Polykondensationsreaktion eines gewissen technischen Geschicks.

Aus der DE-OS 26 09 207 (US 4 052 358) sind ferner pigmentierbare ungesättigte Polyesterharzzusammensetzungen mit geringer Schrumpfung bekannt, die als Glykolkomponente eine Mischung aus 15 bis 70 Mol-% Neopentylglykol und 10 bis 30 Mol-% 2,2-Bis-(4-hydroxycyclohexyl)-propan enthalten und wobei die Glykolkomponente 1 bis 15 Mol-% eines zusätzlichen mehrwertigen Alkohols aufweisen kann. Unter einer Vielzahl geeigneter mehrwertiger Alkohole wird hierfür beispielsweise auch 2-Methyl-butandiol-1,4 genannt.

Die Aufgabe der vorliegenden Erfindung bestand darin, bei Raumtemperatur flüssige, möglichst niedrigviskose Polyester-polyole zu entwickeln, die auf üblichen Vorrichtungen problemlos nach dem Polyisocyanat-polyadditionsverfahren zu kompakten oder zelligen Kunststoffen mit gutem mechanischen Eigenschaftsniveau verarbeitet werden können.

Diese Aufgabe konnte überraschenderweise durch die vollständige oder teilweise Verwendung von 2-Methylbutandiol-1,4 als mehrwertigen Alkohol zur Herstellung von Polyester-polyolen gelöst werden.

Gegenstand der Erfindung sind somit bei 25°C flüssige, Einheiten mit der Struktur $-OCH_2-CH(CH_3)-CH_2-CH_2O-$gebunden enthaltende Polyester-polyole, die hergestellt werden durch Schmelzkondensation von aliphatischen Polycarbonsäuren und/oder Polycarbonsäurederivaten und mindestens einem mehrwertigen aliphatischen Alkohol in Gegenwart oder Abwesenheit von Veresterungskatalysatoren und dadurch gekennzeichnet sind, daß als mehrwertige Alkohole 2-Methyl-butandiol-1,4 oder Mischungen aus 2-Methylbutandiol-1,4 und mindestens einem linearen oder verzweigten, gegebenenfalls Etherbrücken aufweisenden, aliphatischen 2-bis 4-wertigen Alkohol mit einem 2-Methyl-butandiol-1,4-gehalt von mindestens 20 Gew.-%, vor zugsweise 40 bis 80 Gew.-%, bezogen auf das Gewicht der Alkoholmischung verwendet werden.

Gegenstand der Erfindung sind ferner ein Verfahren zur Herstellung von bei 25°C flüssigen, Einheiten mit der Struktur $-OCH_2-CH(CH_3)-CH_2-CH_2O-$gebunden enthaltenden Polyester-polyolen gemäß Anspruch 6 und die Verwendung der erfindungsgemäßen Polyester-polyole nach Anspruch 1 zur Herstellung von kompakten oder zelligen Polyurethan-oder Polyurethan-Polyharnstoff-Kunststoffen, vorzugsweise von kompakten oder zelligen Polyurethan-Elastomeren, nach dem Polyisocyanat-polyadditionsverfahren gemäß Patentanspruch 10.

Die erfindungsgemäßen Polyester-polyole besitzen eine durchschnittliche Funktionalität von 2 bis 3, vorzugsweise von 2 bis 2,5, eine Hydroxylzahl von 25 bis 300, vorzugsweise von 40 bis 80 für elastische, von 80 bis 160 für halbharte und von 160 bis 300 für harte Kunststoffe, eine Säurezahl von kleiner als 2 mg KOH/g, vorzugsweise kleiner als 1 mg KOH/g und insbesondere von 0,9 bis 0,2 mg KOH/g, und eine Viskosität bei 25°C von 200 bis $10^5$, vorzugsweise von 800 bis 20 000 m.Pa.s. Aus den erfindungsgemäßen Polyester-polyolen hergestellte kompakte oder zellige Polyurethane oder Polyurethan-Polyharnstoff-Kunststoffe - im folgenden PU-bzw. PU-PH-Kunststoffe genannt - besitzen für zahlreiche technische Anwendung ein hohes mechanisches Eigenschaftsniveau und zeichnen sich insbesondere durch eine gute Hydrolysestabilität und Verträglichkeit mit inerten physikalisch wirkenden Treibmitteln aus.

Die erfindungsgemäßen Polyester-polyole werden hergestellt durch Polykondensation von aliphatischen Polycarbonsäuren und/oder aliphatischen Polycarbonsäurederivaten, vorzugsweise aliphatischen Dicarbonsäuren mit 2 bis 12 Kohlenstoffatomen, insbesondere 4 bis 6 Kohlenstoffatomen im Alkylenrest und 2-Methyl-butandiol-1,4 oder Mischungen aus 2-Methyl-butandiol-1,4 und mindestens einem gegebenenfalls Etherbrücken aufweisenden verzweigten, vorzugsweise linearen aliphatischen, 2-bis 4-wertigen, vorzugsweise 2-bis 3-wertigen Alkohol, wobei die Mischung zu mindestens 20 Gew.-% aus 2-Methyl-butandiol-1,4 besteht, in Abwesenheit oder vorzugsweise in Gegenwart von üblichen bekannten Veresterungskatalysatoren.

Als geeignete aliphatische Dicarbonsäuren seien beispielsweise genannt: Dodecandi-, Undecandi-, Sebacin-, Azelain-, Kork-, Pimelin-, Adipin-, Glutar-, Bernstein-, Malon-und Oxalsäure. Anstelle der aliphatischen Dicarbonsäuren können auch die entsprechenden Dicarbonsäureanhydride, wie z.B. Bernsteinsäureanhydrid, oder Mono-und/oder Dicarbonsäureester mit niedermolekularen Alkoholen, beispielsweise solchen mit 1 bis 4 Kohlenstoffatomen, vorzugsweise 1 bis 2 Kohlenstoffatomen im Alkylrest, wie z.B. die Dicarbonsäuremono-oder -dimethylester, -ethylester u.a. verwendet werden. Die aliphatischen Dicarbonsäuren und/oder -derivate können ferner einzeln oder als Gemische eingesetzt werden. Vorzugsweise Anwendung finden Mischungen aus Bernsteinsäure, Glutarsäure und Adipinsäure, vorteilhafterweise in Gewichtsverhältnissen von 20 bis 35 : 35 bis 50 : 20 bis 32 und insbesondere Adipinsäure.

Neben 2-Methyl-butandiol-1,4 finden als aliphatische 2-bis 4-wertige Alkohole zur Bildung der Mischung Verwendung: Verzweigte und/oder vorzugsweise lineare Alkandiole mit 2 bis 12 Kohlenstoffatomen, vorzugsweise 2 bis 6 Kohlenstoffatomen im Alkylenrest, Polyoxyalkylen-diole, vorteilhafterweise solche auf der Grundlage von 1,2-Propylenoxid und/oder Ethylenoxid, mit einem Molekulargewicht von 106 bis 622, vorzugsweise von 106 bis 262, lineare oder verzweigte Alkantriole mit 3 bis 6 Kohlenstoffatomen und/oder Pentaerythrit. Beispielhaft genannt seien Alkandiole, wie z.B. 2,2-Dimethyl-propandiol-1,3, 2,2,4-Trimethylhexandiol-1,6, 1,3-Butandiol, Ethandiol, 1,2-bzw. 1,3-Propandiol, 1,4-Butandiol, 1,5-Pentandiol, 1,6-Hexandiol, 1,8-Octandiol, 1,10-Decandiol und 1,12-Dodecandiol, Polyoxyalkylen-diole, wie z.B. Diethylen-glykol, Trioxyethylen-glykol, Tetraoxyethylen-glykol und höhermolekulare Polyoxyethylen-glykole, Dipropylen-glykol, Trioxypropylen-glykol, Tetraoxypropylen-glykol und höhermolekulare Polyoxypropylen-glykole sowie Polyoxypropylen-polyoxyethylen-glykole und Alkantriole, wie z.B. Trimethylol-ethan, Trimethylol-propan und Glycerin. Die mehrwertigen aliphatischen, gegebenenfalls Ethergruppen enthaltende Alkohole können einzeln oder in Form von Mischungen eingesetzt werden. Vorzugsweise Anwendung finden: Ethandiol, 1,2-bzw. 1,3-Propandiol, 1,4-Butandiol, 1,5-Pentandiol, 1,6-Hexandiol, Diethylen-glykol, Dipropylen-glykol, Glycerin, Trimethylolpropan oder eine Mischung aus mindestens zwei der mehrwertigen aliphatischen Alkohole. Sofern zur Herstellung der erfindungsgemäßen Polyester-polyole als mehrwertiger Alkohol nicht ausschließlich 2-Methyl-butandiol-1,4 verwendet wird, bestehen die Alkoholmischungen aus 20 bis ungefähr 100 Gew.-%, vorzugsweise 40 bis 80 Gew.-%, 2-Methyl-butandiol-1,4 und 80 bis ungefähr 0 Gew.-%, vorzugsweise 20 bis ungefähr 60 Gew.-%, mindestens eines linearen oder verzweigten, gegebenenfalls Etherbrücken aufweisenden, aliphatischen Alkohols.

Wie bereits dargelegt wurde, können die aliphatischen Polycarbonsäuren und/oder -derivate und mehrwertigen Alkohole katalysatorfrei oder in Gegenwart von Veresterungskatalysatoren polykondensiert werden. Als Veresterungskatalysatoren kommen beispielsweise Eisen-, Cadmium-, Kobalt-, Blei-, Zink-, Antimon-, Magnesium-, Titan-und Zinnkatalysatoren in Form von Metallen, Metalloxiden oder -salzen in Betracht. Vorzugsweise verwendet werden Zinnsalze, z.B. gemäß US 3 162 616, Zinndioctoat und/oder Tetrabutylorthotitanat.

Zur Herstellung der erfindungsgemäßen Polyester-polyole werden die aliphatischen Polycarbonsäuren und/oder -derivate und das 2-Methyl-butandiol-1,4 oder Mischungen aus 2-Methyl-butandiol-1,4 und mehrwertigen aliphatischen Alkoholen im Molverhältnis von 1 : 1 bis 1,8, vorzugsweise von 1 : 1,05 bis 1,2, katalysatorfrei oder in Gegenwart von Veresterungskatalysatoren, zweckmäßigerweise in einer Atmosphäre aus Inertgasen, wie Stickstoff, Helium, Argon u.a. in der Schmelze bei Temperaturen von 150 bis 250°C, vorzugsweise 180 bis 220°C, gegebenenfalls unter vermindertem Druck bis zu der gewünschten Säurezahl, die zweckmäßigerweise kleiner als 2 ist, polykondensiert. Nach einer bevorzugten Ausführungsform wird das Veresterungsgemisch bei den obengenannten Temperaturen bis zu einer Säurezahl von 80 bis 30, vorzugsweise 40 bis 30, unter Normaldruck und anschließend unter einem Druck von kleiner als 500 mbar, vorzugsweise von 50 bis 150 mbar, polykondensiert. Hierzu sind üblicherweise Polykondensationszeiten von 10 bis 30 Stunden, vorzugsweise von 15 bis 20 Stunden erforderlich.

Die erfindungsgemäßen Polyester-polyole finden, wie bereits dargelegt wurde, Verwendung zur Herstellung von kompakten oder zelligen PU-oder PU-PH-Kunststoffen nach dem Polyisocyanat-polyadditionsverfahren.

Zur Herstellung der PU-oder PU-PH-Kunststoffe bzw. Formkörper werden

a) organische Polyisocyanate mit

b) den erfindungsgemäßen Polyester-polyolen und

c) Kettenverlängerungsmitteln und/oder Vernetzern in Gegenwart von

d) Katalysatoren und gegebenenfalls

e) Treibmitteln,

f) Hilfsmitteln und/oder Zusatzstoffen nach den bekannten technischen Verfahren zur Reaktion gebracht.

Zu den hierfür verwendbaren Ausgangsstoffen (a), (c), (d) und gegebenenfalls (e) und (f) ist folgendes auszuführen:

Als organische Polyisocyanate (a) kommen aliphatische, cycloaliphatische, araliphatische und vorzugsweise aromatische Isocyanate in Frage. Im einzelnen seien beispielhaft genannt: Alkylendiisocyanate mit 4 bis 12 Kohlenstoffatomen im Alkylenrest, wie 1,12-Dodecan-diisocyanat, Tetramethylen-diisocyanat-1,4 und vorzugsweise Hexamethylen-diisocyanat-1,6; cycloaliphatische Diisocyanate, wie Cyclohexan-1,3-und -1,4-diisocyanat sowie beliebige Gemische dieser Isomeren, 1-Isocyanato-3,3,5-trimethyl-5-isocyanatomethyl-cyclohexan (Isophoron-diisocyanat), 2,4-und 2,6-Hexahydrotoluylen-diisocyanat sowie die entsprechenden Isomerengemische, 4,4'-, 2,2'-und 2,4'-Dicyclohexylmethan-diisocyanat sowie die entsprechenden Isomerengemische und vorzugsweise aromatische Di-und Polyisocyanate, wie 4,4'-, 2,4'-und 2,2'-Diisocyanato-diphenylmethan und die entsprechenden Isomerengemische, 2,4-und 2,6-Diisocyanato-toluol und die entsprechenden Isomerengemische, Polyphenyl-polymethylen-polyisocyanate und vorzugsweise Gemische aus Diphenylmethan-diisocyanaten und Polyphenyl-polymethylen-polyisocyanaten (Roh-MDI). Die genannten Di-und Polyisocyanate können einzeln oder in Form von Mischungen eingesetzt werden.

Häufig werden auch sogenannte modifizierte mehrwertige Isocyanate, d.h. Produkte, die durch chemische Umsetzung obiger Di-und/oder Polyisocyanate erhalten werden, verwendet. Als modifizierte organische Di-und Polyisocyanate kommen beispielsweise in Betracht: Carbodiimidgruppen aufweisende Polyisocyanate gemäß DE-PS 10 92 007, Allophanatgruppen aufweisende Polyisocyanate, wie sie z.B. in der britischen Patentschrift 994 890, den ausgelegten Unterlagen des belgischen Patents 761 626 und der NL-OS 71 02 524 beschrieben werden, Isocyanuratgruppen aufweisende Polyisocyanate, wie sie z.B. in der DE-PS 10 22 789, 12 22 067 und 10 27 394 sowie den DE-OS 19 29 034 und 20 04 048 beschrieben werden, Urethangruppen aufweisende Polyisocyanate, wie sie z.B. in den ausgelegten Unterlagen des belgischen Patents 752 261 oder der US-PS 3 394 164 beschrieben werden, acylierte Harnstoffgruppen aufweisende Polyisocyanate z.B. gemäß DE-PS 12 30 778, Biuretgruppen aufweisende Polyisocyanate z.B. gemäß DE-PS 11 01 394 und GB-PS 889 050; durch Telomerisationsreaktion hergestellte Polyisocyanate z.B. entsprechend den ausgelegten Unterlagen des belgischen Patents 723 640, Estergruppen aufweisende Polyisocyanate, wie sie z.B. in der GB-PS 965 474 und 1 072 956, der US-PS 3 567 765 und der DE-PS 12 31 688 genannt werden.

Vorzugsweise kommen jedoch zur Anwendung: urethangruppenhaltige Polyisocyanate, beispielsweise mit niedermolekularen linearen oder verzweigten Alkandiolen, Dialkylen-glykolen oder Polyoxyalkylenglykolen mit Molekulargewichten bis 3000 auf Basis von Ethylenoxid, 1,2-Propylenoxid oder deren Gemischen modifiziertes 4,4'-und/oder 2,4'-Diphenylmethan-diiso cyanat oder 2,4-und/oder 2,6-Toluylen-diisocyanat, Carbodiimidgruppen und/oder Isocyanuratringe enthaltende Polyisocyanate, z.B. auf 4,4'-, 2,4'-Diphenylmethan-diisocyanat-, 2,4-und/oder 2,6-Toluylen-diisocyanat-Basis und insbesondere 4,4'-Diphenylmethan-diisocyanat, Mischungen aus 2,4'-und 4,4'-Diphenylmethan-diisocyanat, Toluylen-diisocyanate, Mischungen aus Diphenylmethan-diisocyanaten und Polyphenyl-polymethylen-polyisocyanaten (Roh-MDI) und Gemischen aus Toluylen-diisocyanaten und Roh-MDI.

Als Kettenverlängerungsmittel und/oder Vernetzer (c) finden mindestens difunktionelle organische Verbindungen aus der Gruppe der

(ci) primären aromatischen Diamine, deren primäre Aminogruppen gegen über Polyisocyanaten durch mindestens einen orthoständigen Alkylsubstituenten zu jeder Aminogruppe sterisch behindert sind,

(cii) sekundären aromatischen Diamine und vorzugsweise

(ciii) mehrwertigen, vorzugsweise zweiwertigen Alkohole und/oder Polyoxyalkylen-polyole mit Molekulargewichten kleiner als 500, vorzugsweise von 62 bis 300, Verwendung.

Als sterisch gehinderte primäre aromatische Diamine (ci) bewährt haben sich und daher vorzugsweise verwendet werden alkylsubstituierte meta-Phenylendiamine der Formeln

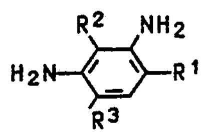

und/oder

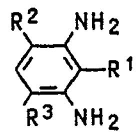

,

in denen $R^1$ ein Wasserstoffatom oder ein linearer oder verzweigter Alkylrest mit 1 bis 12 Kohlenstoffatomen, vorzugsweise 1 bis 6 Kohlenstoffatomen ist und $R^2$ und $R^3$ gleiche oder verschiedene, lineare oder verzweigte Alkylreste mit 1 bis 4 Kohlenstoffatomen, wie z.B. ein Methyl-, Ethyl-, Propyl-, Isopropyl-, Butyl- oder sek. Butylrest sind.

Geeignet sind insbesondere solche Alkylreste $R^1$, bei denen die Verzweigungsstelle am $C_1$-Kohlenstoffatom sitzt. Neben Wasserstoff seien als Alkylreste $R^1$ beispielsweise genannt: der Methyl-, Ethyl-, n-und iso-Propyl-, Butyl-, Hexyl-, Octyl-, Decyl-, 1-Methyl-octyl-, 2-Ethyl-octyl-, 1-Methyl-hexyl-, 1,1-Dimethyl-pentyl-, 1,3,3-Trimethyl-hexyl-, 1-Ethyl-pentyl-, 2-Ethyl-pentyl-und vorzugsweise der Cyclohexyl-, 1-Methyl-n-propyl-, tert.-Butyl-, 1-Ethyl-n-propyl-, 1-Methyl-n-butyl-und 1,1-Dimethyl-n-propylrest.

Als alkylsubstituierte m-Phenylendiamine kommen beispielsweise in Betracht: 2,4-Dimethyl-, 2,4-Diethyl-, 2,4-Diisopropyl-, 2,4-Diethyl-6-methyl-, 2-Methyl-4,6-diethyl-, 2,4,6-Triethyl-, 2,4-Dimethyl-6-cyclohexyl-, 2-Cyclohexyl-4,6-diethyl-, 2-Cyclohexyl-2,6-diisopropyl-, 2,4-Dimethyl-6-(1-ethyl-n-propyl)-, 2,4-Dimethyl-6-(1,1-dimethyl-n-propyl)-und 2-(1-Methyl-n-butyl)-4,6-dimethyl-phenylendiamin-1,3.

Bewährt haben sich ferner alkylsubstituierte Diamino-diphenylmethane, wie z.B. 3,3'-di-und 3,3',5,5'-tetra-n-alkylsubstituierte 4,4'-Diamino-diphenylmethane, wie z.B. 3,3'-Diethyl-, 3,3',5,5'-Tetraethyl-und 3,3',5,5'-Tetra-n-propyl-4,4'-diamino-diphenylmethan.

Anwendung finden vorteilhafterweise Diamino-diphenylmethane der Formel

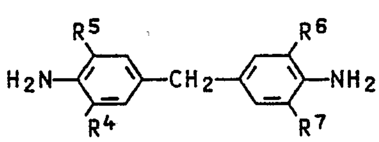

,

in der $R^4$, $R^5$, $R^6$ und $R^7$ gleich oder verschieden sind und einen Methyl-, Ethyl-, Propyl-, Isopropyl-, sek.-Butyl-und tert.-Butylrest bedeuten, wobei jedoch mindestens einer der Reste ein Isopropyl-oder sek.-Butylrest sein muß. Die alkylsubstituierten 4,4'-Diamino-diphenylmethane können auch im Gemisch mit Isomeren der Formeln

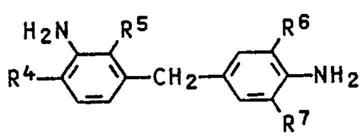

und/oder

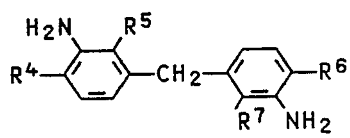

verwendet werden, wobei $R^4$, $R^5$, $R^6$ und $R^7$ die obengenannte Bedeutung haben.

Beispielhaft genannt seien: 3,3',5-Trimethyl-5'-isopropyl-, 3,3',5-Triethyl-5'-isopropyl-, 3,3',5-Trimethyl-5'-sek.-butyl-, 3,3',5-Triethyl-5'-sek.-butyl-4,4'-diamino-diphenylmethan, 3,3'-Dimethyl-5,5'-diisopropyl-, 3,3'-Diethyl-5,5'-diisopropyl-, 3,3'-Dimethyl-5,5'-di-sek.-butyl-, 3,3'-Diethyl-5,5'-di-sek.-butyl-, 3,5-Dimethyl-3',5'-diisopropyl-, 3,5-Diethyl-3',5'-diisopropyl-, 3,5-Dimethyl-3',5'-di-sek.-butyl-, 3,5-Diethyl-3',5'-di-sek.-butyl-4,4'-diamino-diphenylmethan, 3-Methyl-3',5,5'-triisopropyl-, 3-Ethyl-3',5,5'-triisopropyl-, 3-Methyl-3',5,5'-tri-sek.-butyl-, 3-Ethyl-3',5,5'-tri-sek.-butyl-4,4'-diamino-diphenylmethan, 3,3'-Diisopropyl-5,5'-di-sek.-butyl-, 3,5-Diisopropyl-3',5'-di-sek.-butyl-, 3-Ethyl-5-sek.-butyl-3',5'-diisopropyl-, 3-Methyl-5-tert.-butyl-3',5'-diisopropyl-, 3-Ethyl-5-sek.-butyl-3'-methyl-5'-tert.-butyl-, 3,3',5,5'-Tetraisopropyl-und 3,3',5,5'-Tetra-sek.-butyl-4,4'-diamino-diphenylmethan.

Vorzugsweise verwendet werden folgende primären aromatischen Diamine: 2,4-Diethyl-, 2,4-Dimethyl-phenylendiamin-1,3, 2,4-Diethyl-6-methyl-, 2-Methyl-4,6-diethyl-phenylendiamin-1,3, 2,4,6-Triethyl-phenylendiamin-1,3, 2,4-Dimethyl-6-tert.-butyl-, 2,4-Dimethyl-6-isooctyl-und 2,4-Dimethyl-6-cyclohexyl-phenylendiamin-1,3 sowie 3,5-Dimethyl-3',5'-diisopropyl-und 3,3',5,5'-Tetraisopropyl-4,4'-diamino-diphenylmethan.

Die primären aromatischen Diamine (ci) können einzeln oder in Form von Mischungen, beispielsweise aus alkylsubstituierten 1,3-Phenylendiaminen, 3,3'-di-und/oder 3,3',5,5'-tetraalkylsubstituierten 4,4'-Diamino-diphenylmethanen eingesetzt werden.

Als sekundäre aromatische Diamine (cii) seien beispielhaft genannt: N,N'-dialkylsubstituierte aromatische Diamine, die gegebenenfalls am aromatischen Kern durch Alkylreste substituiert sein können, mit 1 bis 20, vorzugsweise 1 bis 4 Kohlenstoffatomen im N-Alkylrest, wie z.B. N,N'-Diethyl-, N,N'-Di-sek.-pentyl-, N,N'-Di-sek.-hexyl-, N,N'-Di-sek.-decyl-, N,N'-Dicyclohexyl-p-bzw. -m-phenylendiamin, N,N'-Dimethyl-, N,N'-Diethyl-, N,N'-Diisopropyl-, N,N'-Di-sek.-butyl-, N,N'-Dicyclohexyl-4,4'-diamino-diphenylmethan und N,N'-Di-sek.-butyl-benzidin.

Als mehrwertige Alkohole und/oder Polyoxyalkylen-polyole (ciii) kommen beispielsweise in Betracht: aliphatische und/oder araliphatische Diole mit 2 bis 14, vorzugsweise 2 bis 6 Kohlenstoffatomen, wie Propandiol-1,3, Decandiol-1,10, Diethylenglykol, Dipropylenglykol, Bis-(2-hydroxyethyl)-hydrochinon und vorzugsweise Ethylenglykol, Butandiol-1,4 und Hexandiol-1,6, Triole, wie Glycerin und Trimethylolpropan, und niedermolekulare Polyoxyalkylen-polyole auf Basis Ethylen-und/oder 1,2-Propylenoxid und den vorgenannten Startermolekülen.

Die Kettenverlängerungsmittel und/oder Vernetzer (c) können einzeln oder in Form von Mischungen zugesetzt werden und kommen beispielsweise in Mengen von 5 bis 50 Gew.-Teilen, vorzugsweise 10 bis 40 Gew.-Teilen und insbesondere 15 bis 30 Gew.-Teilen, bezogen auf 100 Gew.-Teile der Polyester-polyole (b), zur Anwendung. Sofern Mischungen aus sterisch gehinderten primären aromatischen Diaminen (ci) und sek. aromatischen Diaminen (cii) und/oder mehrwertigen Alkoholen (ciii) eingesetzt werden, enthalten diese vorteilhafterweise pro 100 Gew.-Teilen der Komponente (ci) 1 bis 40, vorzugsweise 5 bis 20 Gew.-Teile der Komponenten (cii) und/oder (ciii). Als Kettenverlängerungsmittel verwendet werden insbesondere nie dermolekulare Diole (ciii) und/oder aromatische Diamine (ci), die in ortho-Stellung zu den Aminogruppen mindestens einen Alkylrest gebunden enthalten.

Als Katalysatoren (d) werden zweckmäßigerweise Verbindungen verwendet, die die Reaktion der Polyester-polyole (b) und gegebenenfalls Hydroxylgruppen enthaltenden Verbindungen der Komponenten (ciii) mit den Polyisocyanaten stark beschleunigen. In Betracht kommen organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutyl-zinndiacetat, Dibutylzinn-dilaurat, Dibutylzinn-maleat und Dioctylzinn-diacetat. Die organischen Metallverbindungen werden allein oder vorzugsweise in Kombination mit stark basischen Aminen eingesetzt. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethyl-butandiamin. Pentamethyl-diethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)-octan und Alkanolaminverbindungen, wie Triethanolamin, Triisopropanolamin, N-Methyl-und N-Ethyl-diethanolamin und Dimethylethanolamin.

Als Katalysatoren kommen ferner in Betracht: Tris-(dialkylaminoalkyl)-s-hexahydrotriazine, insbesondere Tris-(N,N-dimethylaminopropyl)-s-hexahydrotriazin, Tetraalkylammoniumhydroxide, wie Tetramethylammoniumhydroxid, Alkalihydroxide, wie Natriumhydroxid und Alkalialkoholate, wie Natriummethylat und Kaliumisopropylat sowie Alkalisalze von langkettigen Fettsäuren mit 10 bis 20 C-Atomen und gegebenenfalls seitenständigen OH-Gruppen. Vorzugsweise verwendet werden 0,001 bis 5 Gew.-%, insbesondere 0,05 bis 2 Gew.-% Katalysator bzw. Katalysatorkombination, bezogen auf das Gewicht der Komponente (b).

Zu Treibmitteln (e), welche zur Herstellung der zelligen Kunststoffe bzw. Formkörper verwendet werden können, gehört Wasser, das mit Isocyanatgruppen unter Bildung von Kohlendioxid reagiert. Die Wassermengen, die zweckmäßigerweise verwendet werden können, betragen 0,5 bis 2 Gew.-%, bezogen auf das Gewicht der Komponente (b).

Andere verwendbare Treibmittel sind niedrigsiedende Flüssigkeiten, die unter dem Einfluß der exothermen Polyadditionsreaktion verdampfen. Geeignet sind Flüssigkeiten, welche gegenüber dem organischen Polyisocyanat inert sind und Siedepunkte unter 100°C aufweisen. Beispiele derartiger, vorzugsweise verwendeter Flüssigkeiten sind halogenierte Kohlenwasserstoffe, wie Methylenchlorid, Trichlorfluormethan, Dichlordifluormethan, Dichlormonofluormethan, Dichlortetrafluorethan und 1,1,2-Trichlor-1,2,2-trifluorethan.

Auch Gemische dieser niedrigsiedenden Flüssigkeit untereinander und/oder mit anderen substituierten oder unsubstituierten Kohlenwasserstoffen können verwendet werden.

Die zweckmäßigste Menge an niedrigsiedender Flüssigkeit zur Herstellung von zellhaltigen PU-oder PU-PH-Formkörpern hängt ab von der Dichte, die man erreichen will sowie gegebenenfalls von der Mitverwendung von Wasser. Im allgemeinen liefern Mengen von 0,5 bis 15 Gew.-Teilen, bezogen auf 100 Gew.-Teilen der Komponente (b) zufriedenstellende Ergebnisse.

Der Reaktionsmischung können gegebenenfalls auch noch Hilfsmittel und/oder Zusatzstoffe (f) einverleibt werden. Genannt seien beispielsweise oberflächenaktive Substanzen, innere Formtrennmittel, Schaumstabilisatoren, Zellregler, Füllstoffe, Farbstoffe, Pigmente, Flammschutzmittel, Hydrolyseschutzmittel, fungistatische und bakteriostatisch wirkende Substanzen.

Als oberflächenaktive Substanzen kommen Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie die Natriumsalze von Ricinusölsulfaten oder von Fettsäuren sowie Salze von Fettsäuren mit Aminen, z.B. ölsaures Diethylamin oder stearinsaures Diethanolamin, Salze von Sulfonsäuren, z.B. Alkali-oder Ammoniumsalze von Dodecylbenzol-oder Dinaphthylmethandisulfonsäure und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl-bzw. Ricinussäureester und Türkischrotöl und Zellregler, wie Paraffine, Fettalkohole und Dimethylpolysiloxane. Die oberflächenaktiven Substanzen werden üblicherweise in Mengen von 0,01 bis 5 Gewichtsteilen, bezogen auf 100 Gewichtsteile der Komponente (b), angewandt.

Als innere Formtrennmittel eignen sich beispielsweise Carbonsäureester und/oder Carbonsäureamide, die hergestellt werden durch Veresterung oder Amidierung einer Mischung aus Montansäure und mindestens einer aliphatischen Carbonsäure mit mindestens 10 Kohlenstoffatomen mit mindestens difunktionellen Alkanolaminen, Polyolen und/oder Polyaminen mit Molekulargewichten von 60 bis 400.

Als Füllstoffe, insbesondere verstärkend wirkende Füllstoffe sind die an sich bekannten üblichen organischen und anorganischen Füllstoffe, Verstärkungsmittel, Beschwerungsmittel, Mittel zur Verbesserung des Abriebverhaltens in Anstrichfarben, Beschichtungsmitteln usw. zu verstehen. Im einzelnen seien beispielhaft genannt: anorganische Füllstoffe wie silikatische Mineralien, beispielsweise Schichtsilikate wie Antigorit, Serpentin, Hornblenden, Amphibole, Chrisotil, Talkum; Metalloxide, wie Kaolin, Aluminiumoxide, Titanoxide und Eisenoxide, Metallsalze, wie Kreide, Schwerspat und anorganische Pigmente, wie Cadmiumsulfid, Zinksulfid sowie Glas, Asbestmehl u.a.. Vorzugsweise verwendet werden Kaolin (China Clay), Aluminiumsilikat und Copräzipitate aus Bariumsulfat und Aluminiumsilikat sowie natürliche und synthetische faserförmige Mineralien, wie Asbest, Wollastonit und insbesondere Glasfasern verschiedener Länge, die gegebenenfalls geschlichtet sein können. Als organische Füllstoffe kommen beispielsweise in Betracht: Kohle, Melamin, Kollophonium, Cyclopentadienylharze und Pfropfpolymerisate auf Styrol-Acrylnitrilbasis, die durch in situ Polymerisation von Acrylnitril-Styrol-Mischungen in Polyetherolen analog den Angaben der deutschen Patentschriften 11 11 394, 12 22 669 (US 3 304 273, 3 383 351, 3 523 093), 11 52 536 (GB 1 040 452) und 11 52 537 (GB 987 618) hergestellt werden sowie Filler-polyoxyalkylen-polyole, bei denen wäßrige Polymerdispersionen in Polyoxyalkylen-polyoldispersionen übergeführt werden.

Die anorganischen und organischen Füllstoffe werden der Reaktionsmischung vorteilhafterweise in Mengen von 0,5 bis 50 Gew.-%, vorzugsweise 1 bis 40 Gew.-%, bezogen auf das Gewicht der Komponente (a) bis (c), einverleibt.

Geeignete Flammschutzmittel sind beispielsweise Trikresylphosphat, Tris-2-chlorethylphosphat, Trischlorpropylphosphat und Tris-2,3-dibrompropylphosphat.

Außer den bereits genannten halogensubstituierten Phosphaten können auch anorganische Flammschutzmittel, wie Aluminiumoxidhydrat, Antimontrioxid, Arsenoxid, Ammoniumpolyphosphat und Calciumsulfat zum Flammfestmachen der Kunststoffe bzw. Formkörper verwendet werden. Im allgemeinen hat es sich als zweckmäßig erwiesen, 5 bis 50 Gew.-Teile, vorzugsweise 5 bis 25 Gew.-Teile der genannten Flammschutzmittel für jeweils 100 Gew.-Teile der Komponente (b) zu verwenden.

Nähere Angaben über die obengenannten anderen üblichen Hilfs-und Zusatzstoffe sind der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964, zu entnehmen.

Zur Herstellung der gegebenenfalls zelligen PU-oder PU-PH-Formkörper werden die organischen Polyisocyanate (a), Polyester-polyole (b) und Kettenverlängerungsmittel und/oder Vernetzer (c) in solchen Mengen zur Umsetzung gebracht, daß das Äquivalenz-Verhältnis von NCO-Gruppen der Polyisocyanate (a) zur Summe der reaktiven Wasserstoffatome der Komponenten (b) und (c) 1:0,85 bis 1,25, vorzugsweise 1:0,95 bis 1,15, beträgt.

Die Herstellung der kompakten und vorzugsweise zellhaltigen Formkörper erfolgt nach dem Prepolymer-Verfahren oder vorzugsweise nach dem one shot-Verfahren, wobei PU-Formkörper zweckmäßigerweise mit Hilfe der Niederdrucktechnik und PU-PH-Formkörper mit Hilfe der Reaktionsspritzguß-Technik hergestellt werden.

Diese Verfahrenstechniken werden z.B. beschrieben von Piechota und Röhr in "Integralschaumstoff", Carl-Hanser-Verlag, München, Wien 1975; D.J. Prepelka und J.L. Wharton in Journal of Cellular Plastics, März/April 1975, Seiten 87 bis 98 und U. Knipp in Journal of Cellular Plastics, März/April 1973, Seiten 76 bis 84.

Bei Verwendung einer Mischkammer mit mehreren Zulaufdüsen können die Ausgangskomponenten einzeln zugeführt und in der Mischkammer intensiv vermischt werden. Als besonders vorteilhaft hat es sich erwiesen, nach dem Zweikomponenten-Verfahren zu arbeiten und die Kettenverlängerungsmittel und/oder Vernetzer (c) und Katalysatoren (d) in den Polyester-polyolen (b) zu lösen und gegebenenfalls mit Treibmittel (e), Hilfsmitteln und/oder Zusatzstoffen (f) in der Komponente (A) zu vereinigen und als Komponente (B) die organischen, gegebenenfalls modifizierten Polyisocyanate zu verwenden. Vorteilhaft ist hierbei beispielsweise, daß die Komponenten (A) und (B) getrennt gelagert und raumsparend transportiert werden können und bei der Verarbeitung nur noch in den entsprechenden Mengen gemischt werden müssen.

Zur Herstellung von Formkörpern wird die Menge des in das Formwerkzeug eingebrachten Reaktionsgemisches so bemessen, daß die erhaltenen kompakten Formkörper eine Dichte von 1,0 bis 1,4 $g/cm^3$, vorzugsweise von 1,0 bis 1,2 $g/cm^3$, und die zellhaltigen Formkörper eine Dichte von 0,2 bis 1,1 $g/cm^3$ aufweisen, wobei die mikrozellularen Formkörper vorzugsweise eine Dichte von 0,8 bis 1,0 $g/cm^3$, Schuhsohlen vorzugsweise eine Dichte von 0,4 bis 0,65 $g/cm^3$ und Schaumstoffe vorzugsweise eine Dichte von 0,25 bis 0,4 $g/cm^3$ besitzen. Die Ausgangskomponenten werden mit einer Temperatur von 15 bis 80°C, vorzugsweise 20 bis 60°C und insbesondere 25 bis 55°C, in das Formwerkzeug eingebracht. Die Formwerkzeugtemperatur beträgt zweckmäßigerweise 20 bis 100°C, vorzugsweise 30 bis 80°C. Die Verdichtungsgrade zur Herstellung der mikrozellularen oder zellhaltigen Formkörper liegen zwischen 1,1 und 8, vorzugsweise zwischen 2 und 8.

Die nach dem erfindungsgemäßen Verfahren erhaltenen kompakten bzw. zelligen PU-bzw. PU-PH-Formkörper eignen sich insbesondere zur Verwendung in der Automobilindustrie, beispielsweise als Stoßstangenabdeckungen, Rammschutzleisten und Karosserieteile wie Regenrinnen, Kotflügel, Spoiler und Radkästenverbreiterungen sowie als technische Gehäuseteile, Laufrollen und Schuhsohlen. Die Schaumstoffe finden beispielsweise als Armlehnen, Kopfstützen, Sicherheitsabdeckungen im Automobilinnenraum sowie als Motorrad-und Fahrradsättel und Deckschichten in Verbundschaumstoffen Anwendung.

Die in den Beispielen genannten Teile beziehen sich auf das Gewicht.

Herstellung der erfindungsgemäßen Polyester-polyole

Beispiel 1

100 Gew.-Teile Adipinsäure, 31,1 Gew.-Teile Ethandiol und 26,1 Gew.-Teile 2-Methylbutandiol-1,4 wurden unter Normaldruck und Abdestillieren des Kondensationswassers bei Temperaturen bis 220°C verestert. Anschließend wurde die Polykondensation unter Druckerniedrigung bis ca. 40 mbar zu Ende geführt. Nach Abtrennung von 24,6 Gew.-Teilen Wasser erhielt man ein bei Raumtemperatur flüssiges Ethandiol-2-Methylbutandiol-1,4-polyadipat mit den folgenden Kennzahlen:

Hydroxylzahl: 54,9 mg KOH/g
Säurezahl: 0,8 mg KOH/g
Viskosität bei 25°C: 8797 mPa.s
Viskosität bei 75°C: 521 mPa.s
Jodfarbzahl: 1 bis 2

Beispiele 2 bis 4 und Vergleichsbeispiele A bis C

Verfuhr man analog den Angaben von Beispiel 1, verwendete jedoch die in Tabelle 1 zusammengefaßten Ausgangsstoffe und Mengen, so erhielt man nach den Beispielen 2 bis 4 gemäß der Erfindung bei Raumtemperatur flüssige Polyadipate, während die Polyadipate gemäß den Vergleichsbeispielen A bis C bei Raumtemperatur fest waren, mit den in Tabelle 1 genannten Kenndaten.

Tabelle 1

| Beispiele<br>Vergleichsbeispiele | | 2 | 3 | 4 | A | B | C |
|---|---|---|---|---|---|---|---|
| **Aufbaukomponenten** | | | | | | | |
| Adipinsäure | [Gew.-Teile] | 100 | 100 | 100 | 100 | 100 | 100 |
| Butandiol-1,4 | [Gew.-Teile] | 34,2 | 43,5 | 45,8 | 33,8 | - | 44,6 |
| 2-Methylbutandiol-1,4 | [Gew.-Teile] | 39,5 | 29 | 49,7 | - | - | - |
| Ethandiol | [Gew.-Teile] | - | - | - | 23,3 | - | 15,3 |
| Neopentylglykol | [Gew.-Teile] | - | - | - | - | 28,5 | - |
| Hexandiol-1,6 | [Gew.-Teile] | - | - | - | - | 59,1 | - |
| **Kenndaten:** | | | | | | | |
| Hydroxylzahl | [mg KOH/h] | 55,5 | 56,2 | 195 | 56 | 56,1 | 56,5 |
| Säurezahl | [mg KOH/h] | 0,8 | 0,7 | 0,5 | 0,6 | 0,9 | 0,5 |
| Viskosität: 25°C | [m.Pa.s] | 8556 | 9102 | 785 | - | - | - |
| Viskosität: 75°C | [m.Pa.s] | 616 | 621 | - | 650 | 655 | 693 |
| Jodfarbzahl | | <1 | <1 | <1 | - | - | - |
| Aggregatzustand bei Raumtemperatur | | flüssig | flüssig | flüssig | fest | fest | fest |

## Beispiel 5 und Vergleichsbeispiele D und E

Zur Bestimmung der Verträglichkeit von Trichlorfluormethan wurde in einer charakteristischen Polyurethan-Hartschaumformulierung unter Variation des Polyester-polyols die maximal lösliche Treibmittelmenge bestimmt, ohne daß eine Trübung der Formulierung eintrat.

| Beispiel/ Vergleichsbeispiel | Polyester-polyol | Löslichkeit von Trichlorfluormethan in einer 100 g des genannten Polyester-polyols enthaltenden PU-Hartschaumstoffformulierung [g] |
|---|---|---|
| 5 | Butandiol-1,4-2-Methylbutandiol-2,4-polyadipat nach Beispiel 4 | 50 |
| D | Ethandiol-polyadipat | 21 |
| E | Diethylenglykol-phthalat (®Niax APP 315) | 15 |

Beispiele 6a und 6b

Polyurethanformulierungen zur Herstellung von Schuhsohlen

A-Komponente: Mischung aus

- 87,7 Gew.-Teilen Polyester-polyol,
- 9,0 Gew.-Teilen Ethylenglykol,
- 1,0 Gew.-Teilen einer 33gew.-%igen Lösung von Triethylendiamin in Ethylenglykol,
- 0,1 Gew.-Teilen Silikonöl,
- 0,2 Gew.-Teilen Wasser und
- 2,0 Gew.-Teilen 1,1,2-Trichlor-1,2,2-trifluorethan

B-Komponente:

Prepolymer mit einem NCO-Gehalt von 18,7, hergestellt aus dem erfindungsgemäßen Ethandiol-2-Methylbutandiol-1,4-polyadipat nach Beispiel 1 und 4,4'-Diphenylmethan-diisocyanat.

Zur Herstellung der Schuhsohlen wurden 100 Gew.-Teile der Komponente A und 92,5 Gew.-Teile der Komponente B bei Raumtemperatur intensiv gemischt, in an sich bekannter Weise in ein auf 40°C temperiertes metallisches Formwerkzeug eingebracht und in dem geschlossenen Formwerkzeug aushärten gelassen. Aufgrund der niedrigen Viskositäten der erfindungsgemäßen Polyester-polyole war eine gleich gute Verarbeitung sowohl nach dem Niederdruck-als auch nach dem Hochdruckverfahren möglich. Die erhaltenen zelligen Polyurethan-Elastomeren zeichneten sich durch hervorragende mechanische Eigenschaften, insbesondere durch eine tiefe Kälteflexibilität und sehr gute Hydrolysestabilität aus.

Die an den Formteilen gemessenen mechanischen Eigenschaften sind in Tabelle 2 zusammengefaßt.

Tabelle 2

| Beispiele | | 6a | 6b |
|---|---|---|---|
| Verwendetes Butandiol-1,4-2-Methylbutandiol-1,4-polyadipat nach Beispiel | | 1 | 2 |
| mechanische Eigenschaften: | | | |
| Dauerbiegeverhalten nach 30000 Belastungscyclen | | in Ordnung | in Ordnung |
| Dauerbiegeverhalten bei -30°C nach 30000 Belastungscyclen | | in Ordnung | in Ordnung |
| Dehnung nach DIN 53 504 | [%] | 460 | 470 |
| Weiterreißfestigkeit nach Graves gemäß DIN 53 515 | [N/mm] | 13,5 | 14,2 |
| Reißfestigkeit nach DIN 53 504 | [N/mm²] | 9.8 | 10.0 |

**Ansprüche**

1. Bei 25°C flüssige, Einheiten mit der Struktur $-OCH_2-CH(CH_3)-CH_2-CH_2O-$gebunden enthaltende Polyester-polyole, hergestellt durch Schmelzkondensation in Gegenwart oder Abwesenheit von Veresterungskatalysatoren von aliphatischen Polycarbonsäuren und/oder Polycarbonsäurederivaten und mindestens einem mehrwertigen aliphatischen Alkohol, dadurch gekennzeichnet, daß man als mehrwertigen Alkohol 2-Methyl-butandiol-1,4 oder eine Mischung aus 2-Methyl-butandiol-1,4 und mindestens einem linearen oder verzweigten, gegebenenfalls Etherbrücken aufweisenden aliphatischen 2-bis 4-wertigen Alkohol mit einem 2-Methyl-butandiol-1,4-gehalt von mindestens 20 Gew.-%, bezogen auf das Gewicht der Alkoholmischung, verwendet.

2. Polyester-polyole nach Anspruch 1, dadurch gekennzeichnet, daß sie eine durchschnittliche Funktionalität von 2 bis 3, eine Hydroxylzahl von 25 bis 300, eine Säurezahl von kleiner als 2 und eine Viskosität bei 25°C von 200 bis $10^5$ m.Pa.s besitzen.

3. Polyester-polyole nach Anspruch 1, dadurch gekennzeichnet, daß man als aliphatische Polycarbonsäuren Adipinsäure oder eine Mischung aus Bernstein-, Glutar-und/oder Adipinsäure verwendet.

4. Polyester-polyole nach Anspruch 1, dadurch gekennzeichnet, daß die Mischung aus mehrwertigen aliphatischen Alkoholen besteht aus

(i) 20 bis ungefähr 100 Gew.-% 2-Methyl-butandiol-1,4 und

(ii) 80 bis ungefähr 0 Gew.-% mindestens eines linearen oder verzweigten Alkandiols mit 2 bis 12 Kohlenstoffatomen, eines Polyoxyalkylen-diols mit einem Molekulargewicht von 106 bis 622, eines linearen oder verzweigten Alkantriols mit 3 bis 6 Kohlenstoffatomen und/oder Pentaerythrit, wobei die Gew.-% bezogen auf das Gesamtgewicht der Alkoholmischung.

5. Polyester-polyole nach Anspruch 1, dadurch gekennzeichnet, daß die Mischung aus mehrwertigen aliphatischen Alkoholen besteht aus

(i) 20 bis ungefähr 100 Gew.-% 2-Methyl-butandiol-1,4 und

(ii) 80 bis ungefähr 0 Gew.-% Ethandiol, 1,2-bzw. 1,3-Propandiol, 1,4-Butandiol, 1,5-Pentandiol, 1,6-Hexandiol, Diethylen-glykol, Dipropylen-glykol, Glycerin, Trimethylolpropan oder einer Mischung aus mindestens zwei der mehrwertigen aliphatischen Alkohole (ii).

6. Verfahren zur Herstellung von bei 25°C flüssigen, Einheiten mit der Struktur $-OCH_2-CH(CH_3)-CH_2-CH_2O-$gebunden enthaltenden Polyester-polyolen durch Polykondensation in der Schmelze von aliphatischen Polycarbonsäuren und/oder Polycarbonsäurederivaten und mindestens einem mehrwertigen aliphatischen Alkohol in Gegenwart oder Abwesenheit von Veresterungskatalysatoren, dadurch gekennzeichnet, daß man als mehrwertigen Alkohol 2-Methyl-butandiol-1,4 oder eine Mischung aus 2-Methyl-butandiol-1,4 und mindestens einem linearen oder verzweigten, gegebenenfalls Etherbrücken aufweisenden aliphatischen 2-bis 4-wertigen Alkohol mit einem 2-Methyl-butandiol-1,4-gehalt von mindestens 20 Gew.-%, bezogen auf das Gewicht der Alkoholmischung verwendet.

7. Verfahren nach Anspruch 6, dadurch gekennzeichnet, daß die Polyester-polyole eine durchschnittliche Funktionalität von 2 bis 3, eine Hydroxylzahl von 25 bis 300, eine Säurezahl von kleiner als 2 und eine Viskosität bei 25°C von 200 bis $10^5$ m.Pa.s besitzen.

8. Verfahren nach Anspruch 6, dadurch gekennzeichnet, daß man als aliphatische Polycarbonsäuren Adipinsäure oder eine Mischung aus Bernstein-, Glutar-und/oder Adipinsäure verwendet.

9. Verfahren nach Anspruch 6, dadurch gekennzeichnet, daß man als mehrwertige Alkohole eine Mischung verwendet, die besteht aus

(i) 20 bis ungefähr 100 Gew.-% 2-Methyl-butandiol-1,4 und

(ii) 80 bis ungefähr 0 Gew.-% mindestens eines linearen oder verzweigten Alkandiols mit 2 bis 12 Kohlenstoffatomen, eines Polyoxyalkylen-diols mit einem Molekulargewicht von 106 bis 622, eines linearen oder verzweigten Alkantriols mit 3 bis 6 Kohlenstoffatomen und/oder Pentaerythrit, wobei die Gew.-% bezogen sind auf das Gesamtgewicht der Alkoholmischung.

10. Verwendung von bei 25°C flüssigen, Einheiten mit der Struktur $-OCH_2-CH(CH_3)-CH_2-CH_2O-$gebunden enthaltenden Polyester-polyolen nach Anspruch 1 zur Herstellung von kompakten oder zelligen Polyurethan- oder Polyurethan-Polyharnstoff-Kunststoffen, vorzugsweise Polyurethan-Elastomeren, nach dem Polyisocyanat-polyadditionsverfahren.

Europäisches Patentamt

# EUROPÄISCHER RECHERCHENBERICHT

Nummer der Anmeldung

EP 87 10 5757

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | GB-A- 781 469 (THE B.F. GOODRICH CO.)<br>* Anspruch 1; Seite 2, Zeilen 53-73 *<br>--- | 1-10 | C 08 G 18/42<br>C 08 G 63/16 |
| X | FR-A-2 147 161 (DU PONT DE NEMOURS)<br>* Seite 1, Zeilen 1-4 *<br>--- | 1 | |
| A | GB-A-1 475 541 (I.C.I.)<br>* Anspruch 1; Beispiel 1 *<br>----- | 1 | |
| | | | RECHERCHIERTE SACHGEBIETE (Int. Cl.4) |
| | | | C 08 G |

Der vorliegende Recherchenbericht wurde für alle Patentansprüche erstellt.

| Recherchenort | Abschlußdatum der Recherche | Prüfer |
|---|---|---|
| DEN HAAG | 12-08-1987 | VAN PUYMBROECK M.A. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82